# EUROPEAN PATENT SPECIFICATION

(11) **EP 4 484 742 B1**
(45) Date of publication and mention of the grant of the patent: **04.03.2026**
(21) Application number: 24020184.8
(22) Date of filing: 06.06.2024
(51) Int. Cl.: F03B 13/18

(54) **ELECTRICITY PRODUCTION SYSTEM USING THE ENERGY DEVELOPED BY SEA WAVES**
ELEKTRIZITÄTSERZEUGUNGSSYSTEM UNTER VERWENDUNG DER VON MEERESWELLEN ERZEUGTEN ENERGIE
SYSTÈME DE PRODUCTION D'ÉLECTRICITÉ UTILISANT L'ÉNERGIE DÉVELOPPÉE PAR LES VAGUES DE LA MER

(30) Priority: 26.06.2023 IT 202300013176
(43) Date of publication of application: 01.01.2025
(73) Proprietor: Falconi, Marta, 8008 Zurigo (CH)
(72) Inventor: Falconi, Sandro, I - 00134 ROMA (RM) (IT)
(74) Representative: Cacciamani, Clizia

(56) References cited:
- EP-A1- 2 071 181
- WO-A1-2007/030841
- WO-A1-2022/055469
- GB-A- 2 068 469
- US-A1- 2017 016 425

## Description

### Field of the invention

The present invention refers to an electrical energy production system that uses the energy developed by sea waves.

### State of the art.

Nowadays, many techniques for using the sea wave motion to produce energy in different ways are known.

For example, it is possible to recreate a water drop using basins higher than sea level and narrow passages in the water path, which under the wave pressure allow the water itself to rise to fill the basin. This system allows energy production like classic hydroelectric basins. The limit of this system is that it has very large basins but at very modest heights, leading to non-optimal turbines movement to obtain satisfactory results.

Other applications are based on the wave motion entering an artefact such as, for example, a water column, and creates motion in an air column activating the turbines.

Still other applications are based on air containers inflating and deflating under the wave effect and moving the turbines; still other applications are based on floats using the wave amplitude; the motion floats move hydraulic pistons which activate turbines with pressurized liquid. By placing a plurality of these devices in series it is possible to obtain millions of power watts.

Other systems use pillars anchored to the seabed, equipped with an air chamber subject to compression-decompression cycles, due to the overlying water, formed by a box structure with a large hat covering (of the order of tens of meters high and several meters wide), with the capacity to produce megawatts of power. The main problem of these systems is that the wave motion is at low frequency, while the activation of the electric generators requires higher frequencies.

Other systems are based on semi-submerged containers containing gyroscopes. The container movement causes the gyroscope movement (with gyroscopic precession) which activates the generators. These applications also require a lot of space. They generate modest quantities of energy, typically 30-40kw with production peaks of 0.2 MW.

Other systems use marine currents with marine generators similar to wind poles. The application is submerged at different depths, to better intercept the currents; the turbines are therefore moved by the water kinetic force.

Most of the plants described are offshore and are generally presented either as submerged plants or as fixed structures or as floating equipment.

However, in order to generate energy in large quantities, the known in the art systems have the disadvantage of requiring a rather complex implementation.

Furthermore, the known in the art systems are not ecologically advantageous, as they involve high quantities of carbon dioxide production.

The international patent application published with n. WO 2007/030841 A1 describes an apparatus for generating electrical energy from sea waves, wherein the apparatus includes: - a pin support having a first portion anchorable to the seabed and a second portion on which a pin mechanism is supported ; - an arm rotatably supported by the pivot mechanism wherein the arm is divided into two portions of unequal length by the pivot mechanism; - a float mounted on a terminal portion of the arm; - a pump actuator connected to the other end of the boom so that, when the boom is pushed up and down due to the action of sea waves on the float, water is pumped by a pump operatively connected to the actuator in response to wave action; and - turbine means for using the water pumped by the pump for the production of electricity.

The European patent application no. EP 2071181 A1 describes an apparatus for transforming the wave motion energy into another type of usable energy; the apparatus comprises a float having an orifice in the centre, in this orifice there is arranged a rigid pipe firmly hydraulically fixed connected at one of its ends to a flexible tube, and at the other end to a check valve at the end immersed in the water bed. From the opposite end of the pipe, which joins hydraulically to the rigid pipe, the pipe terminates in a water tank located on dry ground and above mean sea level.

US Patent Application No. US 2017/016425 A1 describes a power generation system including a floating body, a transmission device, a transport tank, an upper container and a power generating assembly. The drive device is driven by a sea force or a buoyant force through the floating body to raise the transport tank to a first position, which is close to the upper container, or to lower the transport tank to a second position, which is at a lower level than the electric motor to recycle solid particles.

Therefore, the Applicant faced the technical problem of how to create an electricity production system using sea waves in a simple, economically and commercially advantageous way, while respecting the environment.

### Summary of the invention

The present invention refers to an electrical energy production system such as that one indicated in claim 1.

The Applicant of the present application has in fact surprisingly found that the technical problem encountered above can be solved effectively and reliably by means of an electrical energy production system capable of using the energy created by a wave motion as defined in claim 1.

In this way, the system of the present invention allows electricity to be generated in a simple and ecological way, as no significant quantities of carbon dioxide are emitted.

In fact, said container reaches the water level and fills with water in a so-called "rest" phase; subsequently, said container "loaded with water" is gradually raised to a height of the order of many tens of metres, in the so-called "working" phase, following an energy impulse supplied by the waves to the device capable of transforming said vertical linear movement of said at least one shaft into a rotary movement. Subsequently, the container is sent downhill, under control, with the action of gravity, until it completely descends into the water, in order to activate the electric generators.

The energy necessary to lift the water is obtained from the Archimedean thrust coming from a propeller, under the action of the waves.

According to a preferred embodiment, said propeller is a closed box, of material and weight determined in equilibrium by the forces so that it can float.

According to a preferred embodiment, said "water-filled" container has the shape of a cube, for example with dimensions of 4m x 4m x 4m, providing a mass of 64,000kg or a gravitational force of 640,000N. For a positioning in the 10 meter high tower, this force collects potential energy of 6,400,000 Joules or a power of 6,400,000 W(J/sec). In other embodiments, said container can be sized so as to have a lower water content and be brought higher over time. In this way, the efforts of the mechanical structures for energy transfer are lightened. The structure can be created to have many smaller containers and synchronize the work phases.

According to other preferred embodiments, said container, like the propeller, has a spherical, parallelepiped, octagonal, oval, cylindrical shape, etc.

According to an alternative embodiment, said container can be replaced by a common weight such as those used as counterweights on construction sites, or with waste materials, or with iron, whose specific weight of 7,780kg/m3 is very advantageous compared to that of water, which is approximately 1,000kg/m3.

According to a preferred embodiment, the system further comprises at least one constant velocity joint placed between said propeller and said at least one shaft.

In this way it is possible to obtain the transmission of movement on two non-aligned axes. In fact, the constant velocity joint is a device for transmitting motion between two shafts which allows the transmission to be maintained, regardless of the angle of inclination between the shafts themselves. In particular, considering that the engine maintains some degrees of freedom, the constant velocity joint can freely transmit the movement to the shaft which will therefore have the necessary precision and will not be able to go outside certain limits.

According to a preferred embodiment, the system further comprises at least one guide suitable for engaging with said at least one shaft so as to allow each of said at least one shaft to move along a corresponding one of said at least one guide with a vertical linear pulsating movement, alternately up or down.

According to a preferred embodiment, said device suitable for transforming said vertical linear movement of said at least one shaft into a rotary movement comprises a semi-compass.

In this way, thanks to the presence of the semi-compass, the linear vertical movement forces of variable dimensions are transferred into fractional rotation movement forces on axles and wheels, limited, but proportionate to the intensity of the forces. In fact, the impulses of the movement of the shaft, of variable intensity and duration, thanks to the action of the semi-compass, produce the rotating movement of the transmission belt.

According to a preferred alternative embodiment, said device suitable for transforming said vertical linear movement of said at least one shaft into a rotary movement comprises a rack and at least one toothed wheel which interacts with said rack.

According to a preferred embodiment, said rack is dimensionally extended.

In this way, the rack can interact with many gear wheels of different sizes. The system can take the shape of many trees.

According to a preferred embodiment, said half-wheel (5) comprises a first half-wheel keyed coaxially on a main kinematic axis and a second half-wheel keyed on a secondary kinematic axis, in which said first half-wheel is suitable for rotate in two directions of rotation and said second half-wheel is capable of rotating along only one direction.

In this way, it is possible to exploit both vertical movements, alternatively upwards and downwards, of the at least one propeller shaft which move the semi-compass and impart a rotation of the main kinematic axis in two possible directions: the first half-wheel is able to rotate respectively along two directions of rotation, the first for forceful holding and the second for easy release. Conversely, the second half-wheel is capable of rotating along a single direction of rotation in the direction of the desired motion, with return blocked.

According to a preferred embodiment, each of said first and second half-wheels are provided with teeth in the shape of saw teeth.

In this way, by reversing the shape of the saw teeth of the half-geared wheels, it is possible to choose the appropriate direction of rotation.

According to a preferred embodiment, there are pins on which said saw teeth engage.

According to a preferred embodiment, suitable springs are present to push said pins.

In this way, thanks to the thrust exerted on the pins, it is possible to reverse the direction of the saw teeth.

According to a preferred embodiment, the system of the present invention also includes at least two towers (also called "stations"), designed to contain further mechanical parts suitable for carrying out the transmission of motion in said system.

According to a preferred embodiment, said at least one tower is suitable for containing a system rotating on multiple axes in the same direction, coaxially coupled to each other by means of joints.

In this way the joints allow the rotation of the axles and the wheels keyed into them.

According to a preferred embodiment, said towers can be at least in blocks of at least two, preferably at least four; however, the towers can be replicated in any number.

In this way, the overall electrical production can reach many tens or hundreds of Megawatts.

According to a preferred embodiment, two of said towers are arranged so that said propeller and said shaft fixed to said propeller are interposed between said two towers.

In this way, one of said two towers is intended to house the mechanical structure intended for collecting the energy due to the uphill wave motion and the other of said two towers is intended to house the mechanical structure intended for collecting the energy due to the descending wave motion.

According to a preferred embodiment, each of said towers is several tens of meters high, for example 100 meters, as in the case of wind turbine poles, to obtain accumulated powers of considerable size.

The height of these towers is established in relation to the amount of energy to be managed.

In this way, a significant gravitational potential energy is obtained directly proportional to it, typically measured in Joules, expressed as weight force in Newtons x height in meters.

According to a preferred embodiment, the system of the present invention further comprises at least one generator speed modifier.

In this way, the generator is allowed to work in optimal conditions.

According to a preferred embodiment, the system of the present invention also includes at least one optical sensor and a strap equipped with a hole integral with said propeller, in which said hole is made according to a sequence recognizable by said optical sensor integral with the fixed structure.

In this way, the optical sensor is able to interpret this sequence and, consequently, is able to determine the direction of the movement, the amplitude of the movement, and therefore determine whether the movement is up or down.

According to a preferred embodiment, the system of the present invention further comprises at least one microprocessor suitable for operating the mechanical elements of the system.

In this way, said microprocessor is able to receive the data detected by said optical sensor, integral with the fixed structure, such as, for example, temperature, wind, wave level, etc. Consequently, by comparing the data detected with that of the data set in the programming, said microprocessor is able to provide for the management and control of the actuators, such as for example joints, brakes, speed, electro-controls and commands, safety assessments.

According to a preferred embodiment, the system of the present invention also includes at least one remote station capable of interacting with said microprocessor via a digital connection, for example via Internet connectivity.

According to a preferred embodiment, the system of the present invention further comprises at least one safety container, arranged below said propeller and integral with it.

In this way, when the sea wave motion is very strong, said safety container floods, safeguarding the system from exaggerated forces.

According to a preferred embodiment, the system of the present invention also includes at least one motorized door or valve activated/deactivated by said microprocessor which regulates the flooding of said safety container based on the data detected by said optical sensor.

According to a preferred embodiment, the system of the present invention further comprises at least one hydraulic pump, operated by said microprocessor.

In this way, once the very strong wave motion situation is over, said safety container is emptied via said hydraulic pump, restoring the initial situation.

According to a preferred embodiment, the system of the present invention further includes shock absorbers which interact with the movement of said

At this node, the movement of the propeller itself is limited.

Further characteristics and advantages of the present invention will be better highlighted by examining the following detailed description of preferred, but not exclusive, embodiments, illustrated for indicative and non-limiting purposes only with the support of the attached drawings. In particular, in such drawings:
- Fig. 1 is an overall schematic view of an embodiment of the system according to a first aspect of the present invention;
- Fig. 2 shows sections B and C of Fig. 1 in detail;
- Fig. 3 shows a detail of the semi-compass shown in Fig. 1 and 2;
- Fig. 4 shows a detail of the action of the semi-compass on the traction wheel;
- Fig. 5 shows in further detail the part of section A of Fig. 1 in which the semi-compass and the semi-wheel are present;
- Fig. 6 shows an embodiment in which a right half-wheel and a left half-wheel are simultaneously present;
- Fig. 7 shows an embodiment in which multiple transmission wheels are assembled coaxially on the same main kinematic axis;
- Fig. 8 is an overall schematic view of a further embodiment of the system of the present invention;
- Fig. 9 shows a detail of the propeller/body of the system of the present invention;
- Fig. 10 schematically shows an embodiment of the generator of the system of the present invention;
- Fig. 11a and 11b show in detail a device for adapting to the speed of the generator in Fig. 2;
- Fig. 12 shows a detail of an embodiment of the system of the present invention which includes a rack.

### Detailed description

The following detailed description refers to particular embodiments of the system of the present invention, without limiting its content.

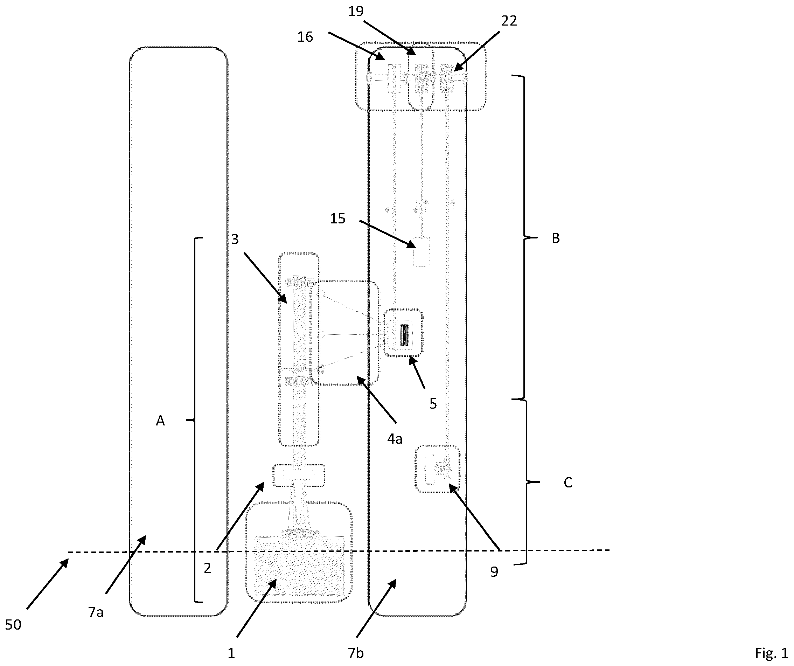

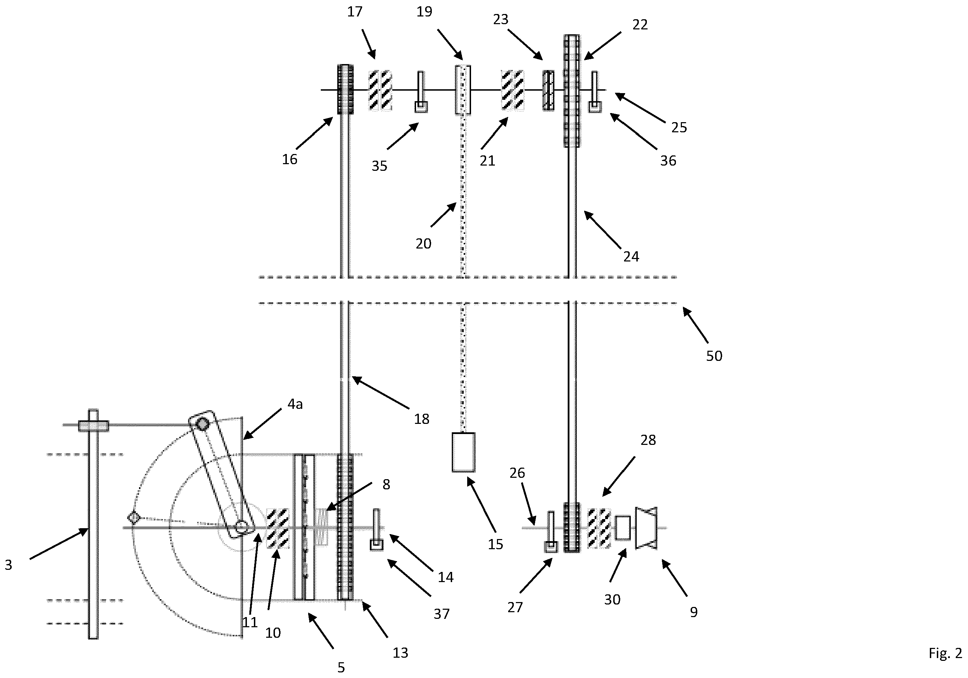

With reference to Fig. 1, and in detail to Fig. 2, a first embodiment of the system of the present invention is described, in which there is a first section A suitable for transforming the energy of said wave motion into mechanical energy, a second section B designed to accumulate mechanical energy in the form of potential energy, and a third section C which allows the potential energy to be transformed into electrical energy.

In the first section A there is a propeller 1 (also called "body"), a constant velocity joint 2, a shaft 3, a semi-compass 4a, and a semi-wheel 5.

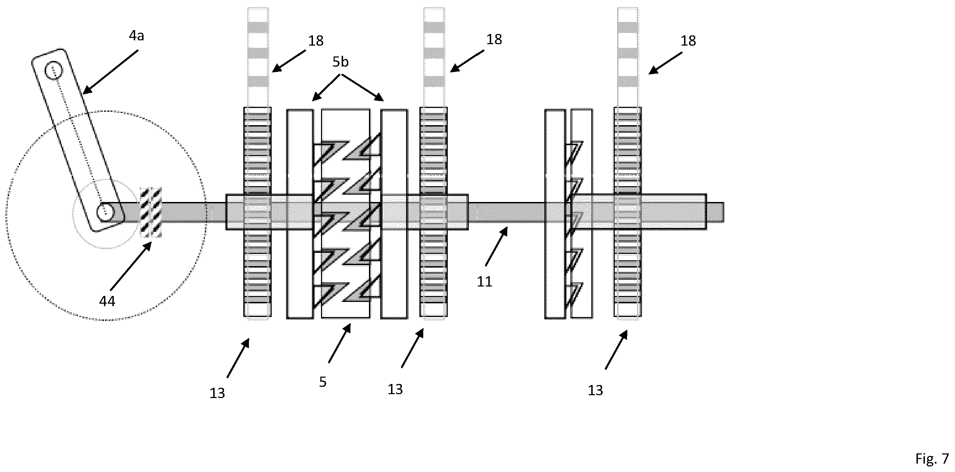

In particular, the propeller 1 is partially immersed in the water, and is capable of receiving a vertical thrust upwards from the wave motion; the shaft 3 is fixed to the propeller 1 and is able to slide along special guides 6 (shown in detail in Fig. 7) with a linear pulsating movement vertically, alternatively upwards or downwards. The propeller 1 can slide vertically inside shaped cases or poles that delimit its movement.

The constant velocity joint 2 (indicated in Fig. 1) allows the transmission of the movement of the shaft 3 on two non-aligned axes; consequently, the shaft 3 transmits a vertical mechanical movement to the semi-compass 4a which is able to transform the vertical linear movement into a rotary movement. The movement of the semi-compass 4a activates the semi-wheel 5, as indicated in Fig. 7.

Fig. 1 also shows the second section B of the system in which there are (shown in detail in Fig. 2): the semi-wheel 5 operated by the semi-compass 4a which also determines a partial rotation of the main kinematic axis 11, which is coaxial with the secondary kinematic axis 14; the container 15, suitable for containing inside it water taken from said wave mode; the transmission wheel 13 driven by the half-wheel 5; the driven transmission receiving wheel 16, driven by the transmission wheel 13 through the movement of the transmission toothed belt 18; a lifting wheel 19 of the container 15 connected to the driven wheel 16 via the first joint 17 and connected to the water container 15 via the steel cable or toothed transmission belt 20; a lowering wheel 22 of the container 15, connected to the lifting wheel 19 via the second joint 21 and connected to the generator 9 via the toothed belt 24. The first joint 17 and the second joint 21 work alternatively. The first closed in the lift of 15 and the second closed in the descent of 15.

Fig. 2 also shows a first brake 35, positioned between the first joint 17 and the lifting wheel 19, useful in case of emergency or for attenuating excess rotations and to avoid return rotations; a device 23, placed between the second joint 21 and the lowering wheel 22, capable of modifying the speed of the system, according to the needs of the generator; a second brake 36, for attenuating the movement of the lowering wheel 22 and for contributing to the required fall speed.

The elements present in sections A and B shown in Fig. 1 and 2 therefore allow, following the impulses of the movement of the shaft 3, of variable intensity and duration, which activate the semi-compass 4a and, consequently, activate the semi-compass - wheel 5 which generates the rotating movement of the secondary kinematic axis 14 and the movement of the toothed transmission belt 18, to allow, in a first phase, the lifting of the container 15 above sea level 50 and up to a height determined for a specific period of time in order to provide an accumulation of said potential energy in the second section B of the system. Subsequently, in a second phase, when necessary, the first joint 17 which had allowed the container 15 loaded with water to be raised is deactivated, and the second joint 21 is instead activated, so as to let the container 15 fall in a controlled manner. with its lowering until it completely descends into the water to transmit the potential energy from the second section B of the system to the third section C of the system.

Fig. 1 also shows the third section C of the system in which there are (shown in detail in Fig. 2): the generator 9, its axis 26, the brake 27, the joint 28 and the device 30 capable of modifying the speed of the generator 9 and to control the mechanical output. Section C is therefore able to transform the potential energy coming from section B into electrical energy (in the typical forms of wind turbines), in particular following the lowering of the loaded container 15 after it had been raised to a suitable height for an appropriate period of time useful for storing potential energy.

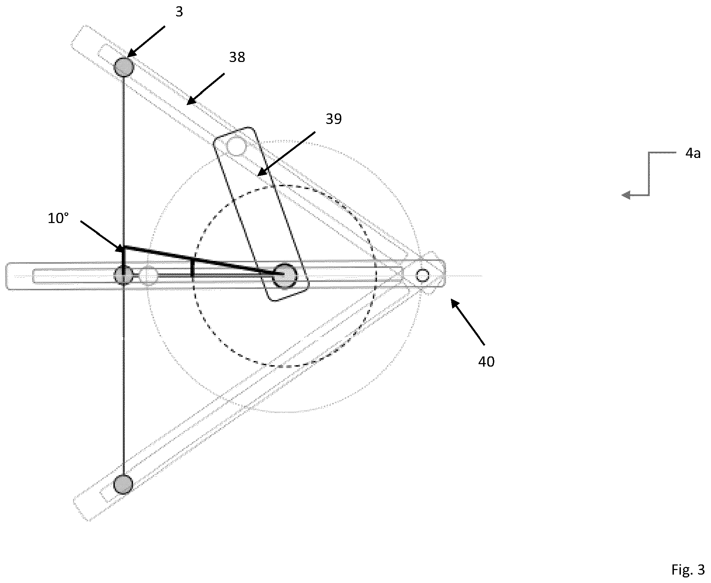

Fig. 3 shows in detail the semi-compass 4a shown in Fig. 2, in which the shaft crosspiece 3, a connecting rod 38, a crank 39, and a fixed rotation point 40 are schematically visible. The semi-compass 4th allows partial subsequent rotations; in particular, a rotation of 10° is shown in Fig. 3.

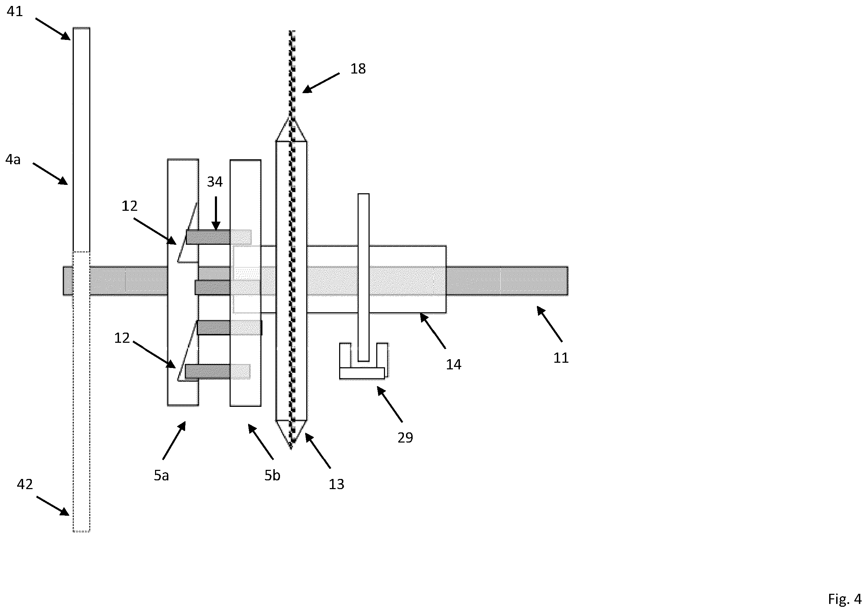

Fig. 4 shows in detail a portion of section A of the system, in which the semi-compass 4a in the possible extreme positions 41,42 keyed onto the main kinematic axis 11 and two semi-cogwheels 5a,5b coupled laterally with sawtooth recesses 12 which work on the pins 34. The first half-cogwheel 5a is provided on the axis of use, called the main kinematic axis 11, and the second half-cogwheel 5b is provided on the secondary kinematic axis 14, coaxial to the main kinematic axis 11.

The first half-toothed wheel 5a is capable of rotating along two directions of rotation respectively, the first for forceful holding and the second for easy release. Conversely, the half-toothed wheel 5b is capable of rotating only in the direction of the desired motion, with return blocked. The transmission wheel 13 or the secondary kinematic axis 14 are toothed and with a retaining spring constitute a ratchet, to allow motion in one direction only and avoid return forces. The brake 29 assists in the rotation of the transmission wheel 13 coaxial to the secondary kinematic axis 14. From the action of the semi-compass 4a onwards, the choice of the appropriate direction of rotation occurs by inverting the shape of the saw teeth 12 of the semi-toothed wheels 5a,5b, which work on the pins 34 pushed by springs 8. Fig. 3 also shows the transmission wheel 13 keyed onto the secondary kinematic axis 14, the cable or traction belt 18, integral with the transmission wheel 13, and the brake 29 on the secondary kinematic axis 14. The teeth and spring of the ratchet are not shown.

The "sawtooth" toothing of the half-wheels 5 12 provides a "robust" coupling in the direction of rotation and a "slippery" coupling in the opposite direction; this mechanism allows the movement of the shaft 3 to be used both upwards and, by reversing the teeth 12, downwards.

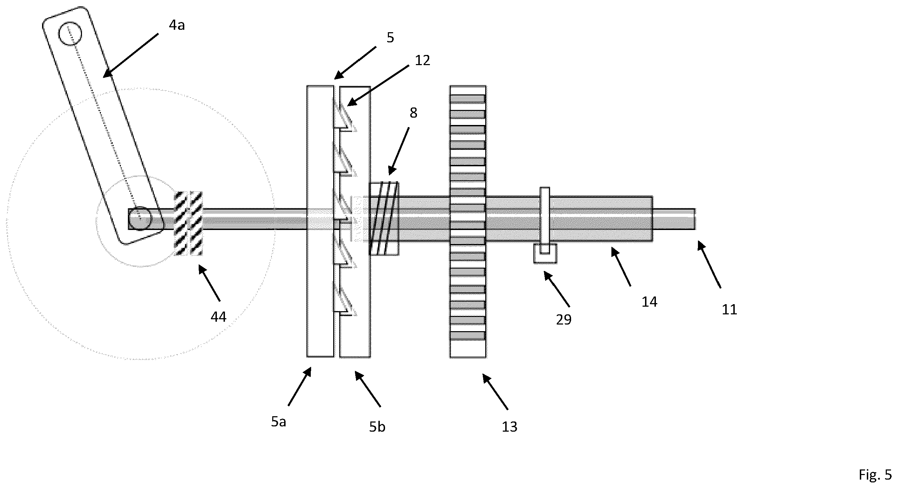

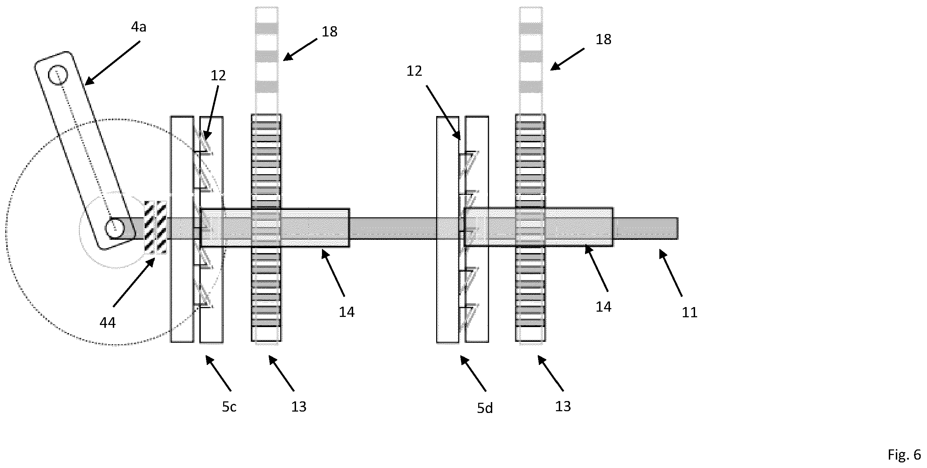

Fig. 5 further shows in detail the part of section A of Fig. 1 in which the semi-compass 4a and the semi-wheel 5 are present, the latter formed by the female semi-cogwheel 5a keyed onto the main axis 11 and by the male semi-cogwheel 5b keyed onto the secondary axis 14. The controlled elastic joint 44 reduces the rigidity of the pulsations and provides, if necessary, for safety disconnection in the event of very rough seas or inactivity of the system (due to maintenance, malfunctions, etc.). A thrust spring 8 pushes the male half-gear wheel 5b on the secondary axis 14 towards the female half-gear wheel 5a on the main kinematic axis 11, to obtain an effective coupling. To transmit the motion, the transmission wheel 13 is used, keyed onto the secondary kinematic axis 14 facing a toothed transmission belt or chain 18, as shown in Fig. 6. In this way, the transmission of the movement to another mechanism can take place. Brake 29 is also shown.

Fig. 6 shows an embodiment in which a right semi-wheel 5c and a left semi-wheel 5d are simultaneously present, to use the upward and downward movements of the semi-compass 4a. In Fig. 6 the inversion of the teeth 12 for coupling the two half-wheels 5c and 5d is evident.

Fig. 7 shows an embodiment in which multiple transmission wheels 13 are assembled in coaxial mode on the same main kinematic axis 11 (each keyed onto its own transmission belt 18 on the secondary kinematic axis 14), to obtain multiple axes secondary kinematics and multiple transmission wheels 13 in the two directions of rotation (high sea and low sea). In particular, the lateral toothed half-wheel 5 is provided with straight and inverted slots, suitable for the two male half-wheels 5b. This application simplifies the structure of the half-wheels 5. It is observed that the lateral toothed half-wheel 5 has slots on the two sides and is keyed to the main kinematic axis 11, while the two male half-wheels 5b are keyed to the corresponding kinematic axis secondary 14. The two male half-wheels 5b rotate in the opposite direction. The teeth and spring blocking the reverse rotation to the desired one, in the shape of the ratchet, are not shown in the drawings.

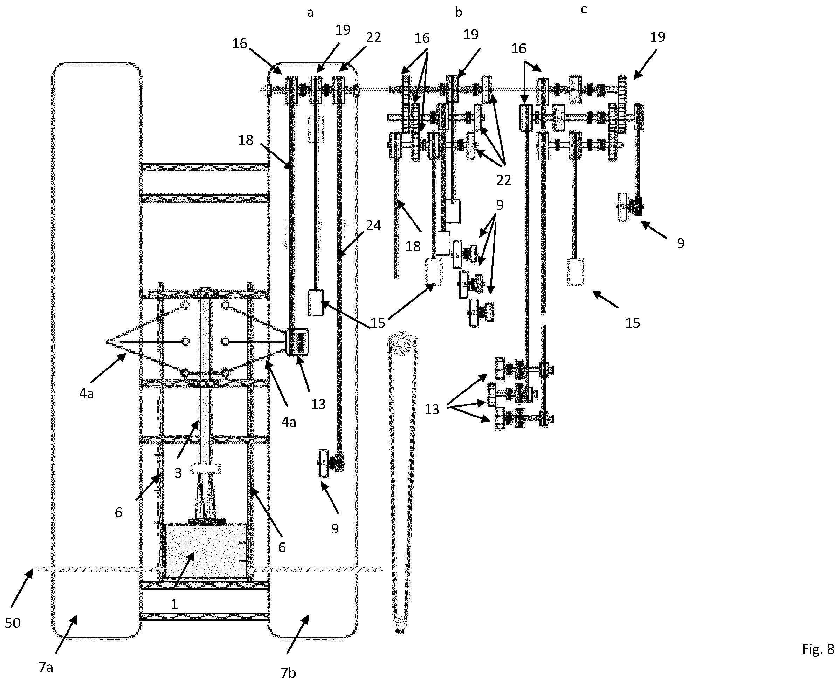

Fig. 8 shows another embodiment of the system of the present invention, in which at least three different situations can be distinguished: case a) is the one described in the previous figures 1 and 2, in which there is only one transmission wheel 13 (and its corresponding toothed transmission belt 18 which drives a corresponding driven wheel 16) which manages a single container 15 for water, via a single lifting wheel 19, which reaches a single generator 9 via a single driving wheel lowering 22. In case b) with just one transmission wheel 13 (and with its corresponding transmission toothed belt 18) three towed wheels 16 are activated which transmit motion to three separate lifting wheels 19 to manage three containers 15 for the water, then transmitting the motion to three distinct lowering wheels 22 of the container 15, to reach three distinct generators 9 via corresponding toothed belts 24. In case c) there are three transmission wheels 13 (each integral with a corresponding belt toothed transmission 18), each of which manages a different container 15 for water (for a total of three containers), each of which reaches a single generator 9. The joints present allow you to select which transmission wheel 13 to enable.

In Fig. 1 and 8, two towers 7a,7b are also visible, arranged so that the propeller 1 and the shaft 3 fixed to the propeller 1 are placed between the two towers 7a,7b. At least one of the two towers 7a, 7b contains mechanical parts useful for carrying out the transmission of motion in the system of the present invention.

The tower 7b shown on the right in Figs. 1 and 8 can be intended for the mechanical structure managed by a right mono-rotating gear wheel 5, while the tower 7a shown on the left can be intended for the mechanical structure managed by the rotation of a gear wheel 5 left single rotary. In this way, energy collection is obtained both for the upward and downward motion of the wave.

The towers 7a,7b can be multiple due to the forces that the propeller 1 imposes on the shaft 3 and the energy transformation mechanisms, so that the overall electrical production can reach many tens or hundreds of Megawatts.

It is necessary for the towers 7a,7b to have a significant height in order to have a significant gravitational potential energy directly proportional to it, which measured in Joules is expressed: weight, force in Newton x height in metres. The heights of the towers are typically several tens of meters, in relation to the amount of energy to be managed.

The system can also include the presence of multiple trees 3.

The container 5 for sea water can have, for example, dimensions equal to 4m x 4m x 4m, with a mass of 64,000kg, or a gravitational force of 640,000N. For positioning in a 10 meter high tower, this force collects potential energy of 6,400,000 Joules or a power of 6,400,000 W(J/sec).

The container 5 can be replaced by a common weight such as those used as counterweights on construction sites, or with waste materials, or with iron whose specific weight of 7,780kg/m3 is very advantageous compared to that of water of around 1,000kg/ m3.

For a principle evaluation, following the hypothesis in the chosen sea, of a recurring theoretical wave per minute, there are 60 waves per hour and 1,440 waves per day.

For example, if at the expense of the wave, the propeller 1 is raised by 0.5m compared to the initial basic position, there is a movement of the semi-compass 4a of approximately 10° (as shown in Fig. 3). This movement allows a consequent movement of the transmission wheel 13 by 36 times.

Consequently, 36 waves (36x10°) are needed to complete one revolution of the secondary kinematic axis 14, in "about half an hour" of time. For a transmission wheel 13 of approximately 3 meters in diameter, on the secondary kinematic axis 14, the path of the belt 18 is 10m (3x3.14)). If the towed wheel 16 receiving the input on the induced kinematic axis has the same dimensions, with 36 waves the container 15 for sea water is raised by 10m.

For each of the 36 phases considered, each corresponding to an amplitude of the semi-compass 4a of 10°, every 0.5m of each wave, the minimum energy required is 6.4MJ/36 = 180,000 Joules.

Evaluating the 0.5m rise of the propeller 1 and the crossbar of the shaft 3, compared to the stable equilibrium position of the floating, there is a further thrust force of 10m x 10m x 0.5m x 1,000 kg x 9.81 = 500,000N at each stage. This force is greater than that necessary to move the semi-compass 4a which will raise the container, 500,000 N x 0.5m = 250,000 Joules, which is greater than the 180,000 Joules seen above, as necessary.

In another embodiment, the container 5 can be sized for a lower water content which is brought higher over time, obtaining the same result. This solution makes it possible to lighten the efforts of the mechanical energy transfer structures. The structure can be created by providing multiple smaller 5 containers, synchronizing the work phases.

Similarly, propeller 1 can be sized differently and the system can be made easier.

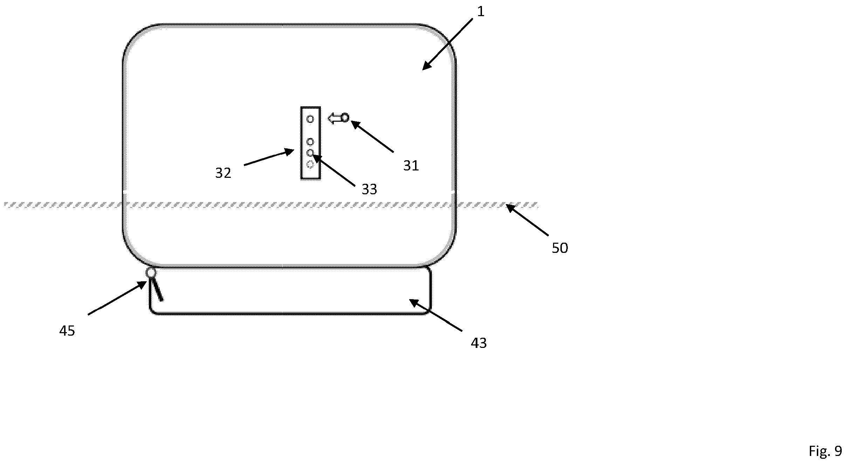

Fig. 9 shows a detail of the propeller/body 1 of the system of the present invention in which an optical sensor 31 and a strip 32 equipped with holes 33 are visible, where the sensor 31 is integral with the fixed support structure and the strip 32 is integral with the propeller 1. The series of holes 33 of the strip 32 is made according to a sequence recognizable by the optical sensor 31 which, by interpreting the sequence, is able to determine the direction and amplitude of the movement of the propeller 1, uphill or downhill. The data detected by the optical sensor 31 is transmitted to a central processor, which will be able to control the management of the system, as well as determining the position of the speed change and any brake. The "perforated strip 32 - optical sensor 33 reading system" also provides knowledge of the state of the sea, due to its ability to establish the level 50, direction and speed of change. Additional sensors can detect other environmental parameters, such as temperature, wind direction and speed, etc. they will help the overall management by the microprocessor. Furthermore, a digital disk with multiple coded tracks is connected to each axis, for the real-time supply of each management and control movement, transmitted to the microprocessor.

The microprocessor, through a suitable interface, exchanges data sent and received from a remote computer that acts as a control center, via Internet connectivity. Every movement or other data is therefore under remote control for functionality, efficiency, safety and maintenance checks.

In this way it is possible to know in real time all the environmental and operating parameters, productivity, critical issues, any anomalies, and anything else deemed necessary or appropriate. In fact, it is the task of the Internet connection to exchange data, for example through one or more "Remote UCR central units", for the management of the entire system or production park and the data exchange of all the programmed functions.

By way of example, this communication can take place with the current 802.11ac WiFi standard. For example, a router with SIM can be inserted that allows connection to the internet. The remote control and management unit, the UCR, communicates with the plurality of Router devices with SIM in the Systems, or in the stations, to receive and communicate data via the Internet network and/or via a telephone data network connected to the central electronic card U, or a router for each station field.

In particular, in the router the UMTS (Universal Mobile Telecommunications System) module stores the data detected and periodically sends them to the remote UCR central unit.

Fig. 9 also shows the presence of a sub-box 43 integral with the propeller 1 which allows a part of the sub-box 43 itself to be flooded for safety, to counteract the violent forces of the water when the sea is very strong. The flooding is carried out using a central microprocessor based on the data detected by the sensors on the force of the sea, acting on a motorized door or valve 45. Once the dangers have been overcome, the initial situation of the device's activity is restored, emptying the sub-caisson 43 by means of a hydraulic pump (not shown in the figures), managed by the microprocessor.

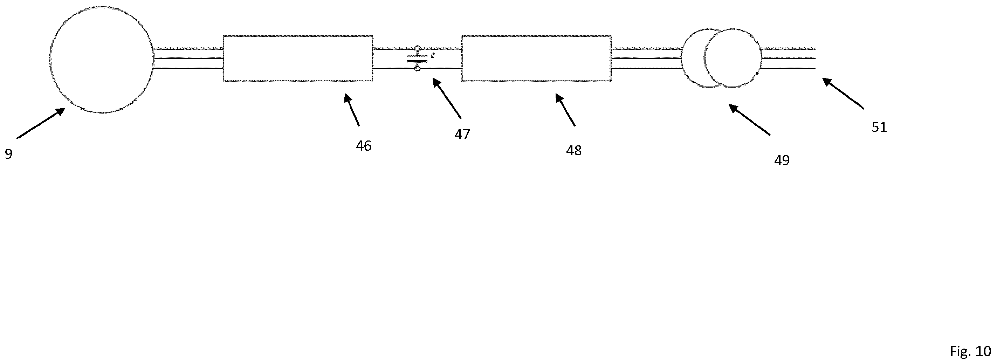

Figure 10 schematically shows an embodiment of the electric generator 9 of the system of the present invention. For the normalization of the frequency and electrical voltage levels, power electronic components are used, such as, for example, an AC:DC converter 46 which transforms what the generator 9 is capable of producing, with non-stable and non-usable natural frequencies and inconsistent amplitudes, charging capacitor 47 into DC voltage levels. Subsequently, a DC:AC converter 48 is used to obtain the required alternating voltages and frequencies, a transformer 49 and a connection line 51.

The generator 9 used in the system of the present invention can also be a wind generator, an aero-generator, or a synchronous generator for powers in the order of MW. Synchronism refers to the rotation speed of the rotor with respect to the stator. The wound-type rotor is powered externally and the stator is connected to the electricity grid. A transformer brings the voltage to the appropriate levels.

In a direct application of the movement to the generator 9, the power applied to the rotation axis is not always constant, but depends on the availability of the waves. By varying the voltage induced in the stator, i.e. the magnetic flux, the output power of the generator is regulated. To have the most constant speed possible, a device capable of modifying the speed is used.

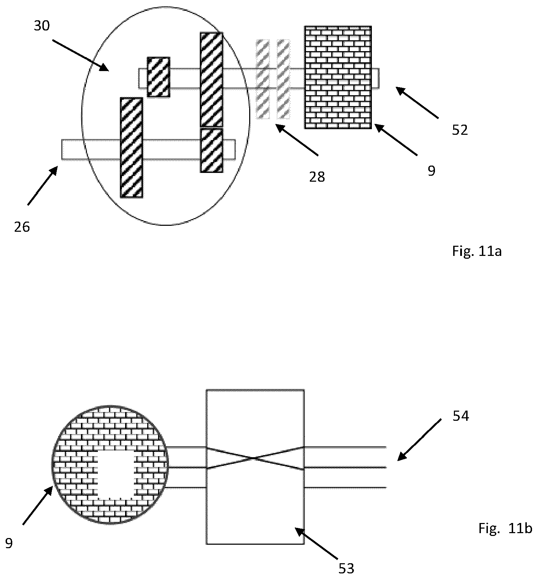

Fig. 11a shows in detail the speed adaptation device 30 of the generator 9 shown in Fig. 2 with respect to the induced kinematic axis 26; the joint or inserter 28 and the axis 52 of the generator 9 are shown. In order to reverse the rotation of the generator, the two poles of the line 54 of the generator 9 are exchanged, as shown in Fig. 11b, by means of an electronic power block 53 controlled by the microprocessor.

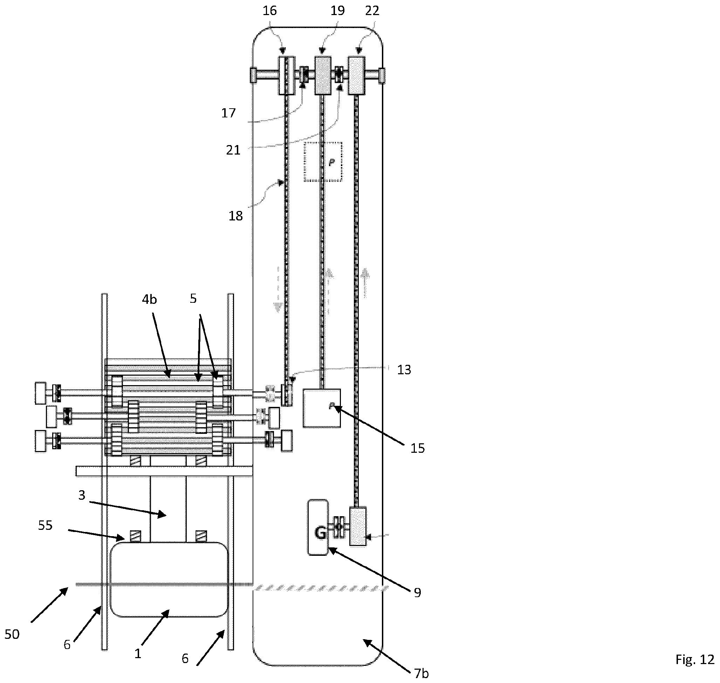

Fig. 12 shows a second alternative embodiment in which, instead of the semi-compass 4a shown in Figs. 1-8, a rack 4b and a plurality of toothed wheels integral with the rack 4b are shown. The rack 4b performs the same function as the semi-compass 4a seen above, i.e. it acts as a device 4 capable of transforming the vertical linear movement of the shaft 3 into a rotary movement. The rack 4b can be dimensionally extended to be able to act with many toothed wheels of different sizes.

Similarly to what is shown in the previous figures which show a semi-compass, also in the embodiment of Fig. 12 in which the rack 4b is shown there are the propeller 1, the shaft 3, the toothed wheels 5 for the rack 4b, the transmission wheel 13 and the belt integral with it 18, the driven wheel 16, the inserter joints 17 and 21 to facilitate the coupling of the driven wheel 16, respectively, with the respective lifting wheels 19 and lowering wheels 22. Furthermore, Fig. 12 shows in detail the guides 6 along which the propeller 1 slides; furthermore, the shock absorbers 55 necessary to limit the movement of the propeller 1 itself are present.

The system of the present invention shown above has significant advantages in respecting the environment. In fact, the towers or stations do not supply themselves with energy products, they do not pollute, they do not emit CO2 or waste, but their production eliminates pollution from traditional generation of equivalent production capacity, being a substitute for it. The life of the system is far greater than traditional production stations, in particular due to the use of electric batteries which produce serious problems with the supply of materials, maintenance and disposal. The end of life of the system described does not produce residues of polluting products. The materials are reusable.

The system described is positioned "offshore" (i.e. offshore, far from the coast) and is generically presented either as a submerged system or as a fixed structure or as floating equipment. The offshore system eliminates the direct visual impact, certainly less than the visual impact caused by the installation of wind poles.

Energy is available when required. Multiple synchronized stations can be created to give production continuity to the network, even of considerable power.

The system is easily controllable and has no particularly dangerous system parts for the safety of operators, as the system or station can be "switched off", or even partially deactivated, for all maintenance operations.

The positioning of the system can also be useful as a weather/marine monitoring point.

The system of the present invention can specifically provide the energy necessary for water desalination applications. This characterization is useful for on-site generation of the much needed energy.

These operations, according to current technologies, take place either by reverse osmosis with the use of particular filters, pressure pumps or in the thermal form, with evaporation and subsequent condensation. The choice depends on installation costs, maintenance costs, maintenance and location. It depends a lot on the quantity of water to be treated, the quality of the results, the quantity of residues to be disposed of.

The system described can easily provide energy with zero raw material costs.

Of course, many modifications and variations of the preferred embodiments described above will be apparent to those skilled in the art, while still remaining within the scope of the invention.

Therefore, the present invention is not limited to the preferred embodiments described, illustrated for illustrative and non-limiting purposes only, but is defined by the claims that follow.

## Claims

1. Electricity production system suitable for using the energy created by a wave motion, wherein said electricity production system comprises: a) a first section (A) suitable for transforming the energy of said wave motion into mechanical energy, b) a second section (B) adapted to accumulate said mechanical energy in the form of potential energy, and c) a third section (C) adapted to produce a reduction of said potential energy into electrical energy,
wherein,
said first section (A) includes:
i) a propeller (1) semi-immersed in water capable of receiving a vertical upward thrust from said wave motion,
ii) at least one shaft (3) fixed to said propeller (1) capable of moving with a vertical linear pulsating movement, alternately upwards or downwards,
iii) at least one device (4) able to transform said vertical linear movement of said at least one shaft (3) into a rotary movement,
iv) at least one half-wheel (5) able to engage with said device (4);
wherein, said second section (B) comprises:
v) at least one container (15) able to contain at its inside the water taken from said wave motion;
vi) at least one transmission wheel (13) adapted to be driven by said half-wheel (5),
vii) at least one trailed wheel (16) connected to said transmission wheel (13);
viii) at least one lifting wheel (19) of the container (15) integral with said at least one trailed wheel (16),
ix) at least one first joint (17) able to connect said trailed wheel (16) with said lifting wheel (19) so as to allow the lifting of said container (15) up to a given height for a determined period of time in order to provide a storage of said potential energy in said second section (B) of the electricity production system;
x) at least one lowering wheel (22) of the container (15), connected to said trailed wheel (16);
xi) at least one second joint (21) able to connect said lifting wheel (19) with said lowering wheel (22) so as to allow the lowering of said container (15) until the complete descent into the water to transmit said potential energy from said second section (B) of the electricity production system to said third section (C) of the electricity production system;
and wherein said third section (C) comprises:
xii) at least one generator (9) adapted to be connected to said lowering wheel (22).

2. Electricity production system according to claim 1, which further comprises at least one homokinetic joint (2) placed between said propeller (1) and said at least one shaft (3).

3. Electricity production system according to any one of the preceding claims, wherein said device (4) suitable for transforming said vertical linear movement of said at least one shaft (3) into a rotary movement comprises a semi-compass (4a).

4. Electricity production system according to any one of claims 1 or 2, wherein said device (4) able to transform said vertical linear movement of said at least one shaft (3) into a rotary movement comprises a rack (4b).

5. Electricity production system according to any one of the preceding claims wherein said half-wheel (5) includes a first sprocket half-wheel (5a), keyed coaxially on a main kinematic axis (11) and a second sprocket half-wheel (5b) keyed on a secondary kinematic axis ( 14), wherein said first sprocket half-wheel (5a) is able to rotate along two rotation directions, while said second sprocket half-wheel (5b) is able to rotate along a single direction of rotation in the direction of the desired motion.

6. Electricity production system according to any one of the preceding claims which further comprises at least one speed modifier (30) of the generator (9).

7. Electricity production system according to any one of the preceding claims which further comprises at least one optical sensor (31) and a strap (32) equipped with a hole (33) integral with said propeller (1), wherein said hole (33) is made according to a sequence recognizable by said optical sensor (31) which, according to the recognized sequence, is able to determine the movement direction of the propeller (1), upwards or downwards.

8. Electricity production system according to any one of the preceding claims which further comprises at least two towers (7a,7b) suitable for containing further mechanical parts suitable for realizing the motion transmission in said electricity production system, and arranged so that said propeller (1) and said shaft (3) fixed to propeller (1) are interposed between the two towers (7a,7b).

9. Electricity production system according to any one of the preceding claims, which further comprises at least one microprocessor adapted to actuate the activities of the mechanical elements of the electricity production system.

10. Electricity production system according to claim 9 which further comprises at least one remote station able to interact through a digital link with said microprocessor.

## Patentansprüche

1. System zur Stromerzeugung, das für die Nutzung der durch Wellenbewegung erzeugten Energie geeignet ist, wobei besagtes System zur Stromerzeugung Folgendes umfasst: a) einen ersten Abschnitt (A), der geeignet ist, die Energie der besagten Wellenbewegung in mechanische Energie umzuwandeln, b) einen zweiten Abschnitt (B), der dazu ausgelegt ist, besagte mechanische Energie in Form von potenzieller Energie zu speichern, und c) einen dritten Abschnitt (C), der dazu ausgelegt ist, eine Reduzierung besagter potenziellen Energie in elektrische Energie umzuwandeln,
wobei,
besagter erster Abschnitt (A) Folgendes umfasst:
i) einen halb in Wasser eingetauchten Propeller (1), der in der Lage ist, durch die besagte Wellenbewegung einen vertikalen Aufwärtsschub aufzunehmen,
ii) mindestens eine Welle (3), die an besagtem Propeller (1) befestigt ist und in der Lage ist, sich abwechselnd nach oben oder unten vertikal linear pulsierend zu bewegen,
iii) mindestens eine Vorrichtung (4), die geeignet ist, besagte vertikale lineare Bewegung der besagten mindestens einen Welle (3) in eine Drehbewegung umzuwandeln,
iv) mindestens ein Halbrad (5), das geeignet ist, mit besagter Vorrichtung (4) zu interagieren;
wobei, besagter zweiter Abschnitt (B) Folgendes umfasst:
v) mindestens einen Behälter (15), der geeignet ist, in seinem Inneren Wasser aus der besagten Wellenbewegung aufzunehmen;
vi) mindestens ein Übertragungsrad (13), das durch besagtes Halbrad (5) angetrieben werden kann,
vii) mindestens ein Schlepprad (16), das mit besagtem Übertragungsrad verbunden ist (13);
viii) mindestens ein Hubrad (19) des Behälters (15), das mit besagtem mindestens einen Schlepprad (16) fest verbunden ist,
ix) mindestens ein erstes Gelenk (17), das geeignet ist, das besagte Schlepprad (16) mit dem besagten Hubrad (19) zu verbinden, um besagtem Behälter (15) für eine bestimmte Zeit auf eine vorgegebene Höhe anzuheben und so die besagte potenzielle Energie in besagtem zweiten Abschnitt (B) des Systems zur Stromerzeugung zu speichern;
x) mindestens ein Absenkrad (22) des Behälters (15), das mit besagtem Schlepprad (16) verbunden ist;
xi) mindestens ein zweites Gelenk (21), das geeignet ist, das besagte Hubrad (19) mit besagten Absenkrad (22) zu verbinden, um das Absenken des besagten Behälters (15) bis zum vollständigen Eintauchen in das Wasser zu ermöglichen und so besagte potenzielle Energie vom besagten zweiten Abschnitt (B) des Systems zur Stromerzeugung auf den besagten dritten Abschnitt (C) des Systems zur Stromerzeugung zu übertragen;
wobei der besagte dritte Abschnitt (C) Folgendes umfasst:
xii) mindestens einen Generator (9), der dazu ausgelegt ist, mit besagtem Absenkrad (22) verbunden zu werden.

2. Ein System zur Stromerzeugung gemäß Anspruch 1, welches ferner mindestens ein homokinetisches Gelenk (2) umfasst, das zwischen besagtem Propeller (1) und besagter mindestens einen Welle (3) angeordnet ist.

3. Ein System zur Stromerzeugung gemäß einem der vorstehenden Ansprüche, wobei besagte Vorrichtung (4), die geeignet ist, besagte vertikale lineare Bewegung der besagten mindestens einen Welle (3) in eine Drehbewegung umzuwandeln, einen Halbkompass (4a) umfasst.

4. Ein System zur Stromerzeugung gemäß einem der vorstehenden Ansprüche 1 oder 2, wobei besagte Vorrichtung (4), die geeignet ist, besagte vertikale lineare Bewegung der besagten mindestens einen Welle (3) in eine Drehbewegung umzuwandeln, eine Zahnstange (4b) umfasst.

5. Ein System zur Stromerzeugung gemäß einem der vorstehenden Ansprüche, wobei besagtes Halbrad (5) ein erstes Kettenradhalbrad (5a) umfasst, das koaxial auf einer Hauptkinematikachse (11) gelagert ist, und ein zweites Kettenradhalbrad (5b), das auf einer Nebenkinematikachse (14) gelagert ist, wobei das besagte erste Kettenradhalbrad (5a) geeignet ist, in zwei Drehrichtungen zu rotieren, während besagtes zweite Kettenrad-Halbrad (5b) geeignet ist, in eine einzige Drehrichtung in Richtung der gewünschten Bewegung zu zu rotieren.

6. Ein System zur Stromerzeugung gemäß einem der vorstehenden Ansprüche, welches ferner mindestens einen Drehzahlregler (30) des Generators (9) umfasst.

7. Ein System zur Stromerzeugung gemäß einem der vorstehenden Ansprüche, welches ferner mindestens einen optischen Sensor (31) und einen Riemen (32) umfasst, der mit einer Öffnung (33) versehen und mit besagtem Propeller (1) fest verbunden ist, wobei besagte Öffnung (33) in einer für besagten optischen Sensor (31) erkennbaren Sequenz angeordnet ist, die geeigent ist, anhand dieser Sequenz die Bewegungsrichtung des Propellers (1) nach oben oder unten zu bestimmen.

8. Ein System zur Stromerzeugung gemäß einem der vorstehenden Ansprüche, welches ferner mindestens zwei Türme (7a,7b) umfasst, die geeignet sind, weitere mechanische Bauteile aufzunehmen, die geeignet sind, die Bewegungsübertragung in besagtem System zur Stromerzeugung dienen zu realisieren, und so angeordnet sind, dass besagter Propeller (1) und besagte mit dem Propeller (1) verbundene Welle (3) zwischen den beiden Türmen (7a, 7b) angeordnet sind.

9. Ein System zur Stromerzeugung gemäß einem der vorstehenden Ansprüche, welches ferner mindestens einen Mikroprozessor umfasst, der in der Lage ist, die Tätigkeiten der mechanischen Elemente des System zur Stromerzeugung anzutreiben.

10. Ein System zur Stromerzeugung gemäß Anspruch 9, welches ferner mindestens eine Fernstation umfasst, die in der Lage ist, über eine digitale Verbindung mit besagtem Mikroprozessor zu interagieren.

## Revendications

1. Système de production d'électricité apte à utiliser l'énergie créée par un mouvement ondulatoire, dans lequel ledit système de production d'électricité comprend : a) une première section (A) apte à transformer l'énergie dudit mouvement ondulatoire en énergie mécanique, b) une deuxième section (B) conçue pour accumuler ladite énergie mécanique sous forme d'énergie potentielle, et c) une troisième section (C) conçue pour produire une réduction de ladite énergie potentielle en énergie électrique,
dans lequel,
ladite première section (A) comprend :
i) une hélice (1) semi-immergée dans l'eau, capable de recevoir une poussée verticale vers le haut provenant dudit mouvement ondulatoire,
ii) au moins un arbre (3) fixé à ladite hélice (1), capable de se déplacer selon un mouvement pulsatoire linéaire vertical, alternativement vers le haut ou vers le bas,
iii) au moins un dispositif (4) apte à transformer ledit mouvement linéaire vertical dudit au moins un arbre (3) en un mouvement rotatif,
iv) au moins une demi-roue (5) apte à s'engager avec ledit dispositif (4) ;
dans lequel ladite deuxième section (B) comprend :
v) au moins un conteneur (15) apte à contenir l'intérieur l'eau prélevée dudit mouvement ondulatoire ;
vi) au moins une roue de transmission (13) conçue pour être entraînée par ladite demi-roue (5),
vii) au moins une roue menée (16) reliée à ladite roue de transmission (13) ;
viii) au moins une roue de levage (19) du conteneur (15) solidaire de ladite au moins une roue menée (16),
ix) au moins un premier joint (17) apte à relier ladite roue menée (16) à ladite roue de levage (19) de manière à permettre le levage dudit conteneur (15) jusqu'à une hauteur donnée pendant une durée déterminée afin d'assurer un stockage de ladite énergie potentielle dans ladite deuxième section (B) du système de production d'électricité ;
x) au moins une roue d'abaissement (22) du conteneur (15), reliée à ladite roue menée (16) ;
xi) au moins un deuxième joint (21) apte à relier ladite roue de levage (19) à ladite roue d'abaissement (22) de manière à permettre l'abaissement dudit conteneur (15) jusqu'à la descente complète dans l'eau pour transmettre ladite énergie potentielle de ladite deuxième section (B) du système de production d'électricité à ladite troisième section (C) du système de production d'électricité ;
et dans lequel ladite troisième section (C) comprend :
xii) au moins un générateur (9) conçu pour être relié à ladite roue d'abaissement (22).

2. Système de production d'électricité selon la revendication 1, comprenant également au moins un joint homocinétique (2) placé entre ladite hélice (1) et ledit au moins un arbre (3).

3. Système de production d'électricité selon l'une quelconque des revendications précédentes, dans lequel ledit dispositif (4) apte à transformer ledit mouvement linéaire vertical dudit au moins un arbre (3) en un mouvement rotatif comprend un demi-compas (4a).

4. Système de production d'électricité selon l'une quelconque des revendications 1 ou 2, dans lequel ledit dispositif (4) capable de transformer ledit mouvement linéaire vertical dudit au moins un arbre (3) en un mouvement rotatif comprend une crémaillère (4b).

5. Système de production d'électricité selon l'une quelconque des revendications précédentes, dans lequel ladite demi-roue (5) comprend une première demi-roue dentée (5a) clavetée coaxialement sur un axe cinématique principal (11) et une deuxième demi-roue dentée (5b) clavetée sur un axe cinématique secondaire (14), dans lequel ladite première demi-roue dentée (5a) est capable de tourner le long de deux directions de rotation, tandis que ladite deuxième demi-roue dentée (5b) est capable de tourner le long d'une seule direction de rotation dans le sens du mouvement souhaité.

6. Système de production d'électricité selon l'une quelconque des revendications précédentes, comprenant également au moins un modificateur de vitesse (30) du générateur (9).

7. Système de production d'électricité selon l'une quelconque des revendications précédentes, comprenant également au moins un capteur optique (31) et une sangle (32) pourvue d'un trou (33) solidaire de ladite hélice (1), dans lequel ledit trou (33) est réalisé selon une séquence reconnaissable par ledit capteur optique (31) qui, selon la séquence reconnue, est capable de déterminer la direction de déplacement de l'hélice (1), vers le haut ou vers le bas.

8. Système de production d'électricité selon l'une quelconque des revendications précédentes, comprenant également au moins deux tours (7a,7b) destinées à contenir d'autres pièces mécaniques aptes à réaliser la transmission de mouvement dans ledit système de production d'électricité, et agencées de telle sorte que ladite hélice (1) et ledit arbre (3) fixé à l'hélice (1) sont interposés entre les deux tours (7a,7b).

9. Système de production d'électricité selon l'une quelconque des revendications précédentes, comprenant également au moins un microprocesseur conçu pour actionner les activités des éléments mécaniques du système de production d'électricité.

10. Système de production d'électricité selon la revendication 9, comprenant également au moins une station distante capable d'interagir par l'intermédiaire d'une liaison numérique avec ledit microprocesseur.
